# EUROPÄISCHE PATENTSCHRIFT

(11) **EP 1 641 686 B1**
(45) Veröffentlichungstag und Bekanntmachung des Hinweises auf die Patenterteilung: **07.03.2007**
(21) Anmeldenummer: 04740465.2
(22) Anmeldetag: 30.06.2004
(51) Int. Cl.: B65F 1/10, B65F 1/14

(54) **ANLAGE FÜR DAS DIFFERENZIERTE UND UNDIFFERENZIERTE SAMMELN VON HAUSMÜLL**
INSTALLATION FOR THE DIFFERENTIATED AND UNDIFFERENTIATED COLLECTION OF DOMESTIC REFUSE
INSTALLATION DE COLLECTE DIFFERENCIEE ET NON DIFFERENCIEE DE DECHETS MENAGERS

(30) Priorität: 04.07.2003 IT BZ20030043
(43) Veröffentlichungstag der Anmeldung: 05.04.2006
(73) Patentinhaber: Isola Srl, 39100 Bolzano (IT)
(72) Erfinder: COATI, Roberto, I-38065 Mori (TN) (IT)
(74) Vertreter: Oberosler, Ludwig
(86) Internationale Anmeldenummer: PCT/EP2004/007085
(87) Internationale Veröffentlichungsnummer: WO 2005/002994

(56) Entgegenhaltungen:
- EP-A- 1 205 404
- EP-A- 1 415 937
- EP-A- 1 484 264
- WO-A-96/22238
- DE-U- 9 013 728

## Beschreibung

Die Erfindung betrifft eine Anlage für das differenzierte und undifferenzierte Sammeln von Hausmüll gemäß dem Oberbegriff des Anspruchs 1.

Aus der WO96/22238 sind Anlagen für das differenzierte und undifferenzierte Sammeln von Hausmüll bekannt in welche der Müll vom Benützer, nach Art getrennt, über einen einzigen Einwurfschacht eingegeben wird, wobei durch Betätigung einer Drucktastenschaittafel die Verschiebung (Rotation) des spezifischen, entsprechenden Sammelbehälters oder Müllcontainers in Füllposition unter die Mündungsöffnung des Einwurfschachtes veranlasst wird. Besagte Anlagen nutzen normalerweise ein "Karussell" mit vertikaler Drehachse wobei die Plattform unterschiedliche Behälter trägt welche meist spezifische Form haben.

Auch aus der EP 1 205 404 A1 ist eine Anlage für das differenzierte und undifferenzierte Sammeln von Hausmüll gemäß dem Oberbegriff des Anspruchs 1 bekannt.

Es ist weiters aus der US 5,257,577 eine Sammelanlage mit wenigen (normalerweise nur drei) Behältern bekannt welche eher kleine Ausmaße und zylindrische oder leicht kegelstumpfe Form haben und auf einer Plattform angeordnet sind um die Abfälle aufzunehmen welche über einen einzigen darüber angeordneten Einwurfschacht eingebracht werden und zum spezifischen, vorbestimmten, Behälter über eine verstellbare Rutsche geleitet werden.

Sei es der Rotationsmechanismus für die Plattform mit den Behältern, als auch der Verstellmechanismus für die Rutsche, sind für den Bau von Anlagen mit größerer Kapazität, bzw. mit einer größeren Anzahl von Behältern, so dass eine weitere Differenzierung der Abfälle möglich wäre oder dass zusätzliche Behälter für eine oder für mehrere besonders häufige oder sperrige Abfallarten vorgesehen werden könnten, nicht geeignet. Diese Anlagen können nicht durch eventuell nachträglich hinzugefügte zusätzliche Einheiten erweitert werden um die Kapazität den Bedürfnissen des Einzugsgebietes anpassen zu können.

Diese Nachteile wirken sich besonders auf die optimale Nutzung der Maschinen und des Personals für die Entleerung, auf den Transport, auf die Reinigung, die Sterilisierung und auf die Wartung der Anlagen, aus.

Die Erfindung stellt sich die Aufgabe eine Anlage für das differenzierte und undifferenzierte Sammeln von Hausmüll zu schaffen welche es ermöglicht das Sammeln und den Transport des Mülls sowie die Instandhaltung und Wartung der Anlage zu optimieren, wobei eine höhere Rationalisierung der Maschinen und der Vorrichtungen welche traditioneller Art sein können, erreicht werden soll.

Zur Lösung dieser Aufgabe schlägt die Erfindung eine Anlage vor in welcher fahrbare bekannte Behälter verwendet werden welche eventuell unterschiedliches Füllvolumen für bestimmte Müllarten aufweisen und welche nebeneinander in zwei parallelen Reihen auf einer Plattform angeordnet sind welche bei, in der Erde versenkten Anlagen, anhebbar ist, wobei über den Behältern eine Vorrichtung für den Transport und die Verteilung des Mülls vorgesehen ist, welche innerhalb einer einzigen horizontalen Ebene nach mehreren Richtungen verschiebbar ist und geeignet ist den Müll aufzunehmen welcher über den Einwurfschacht eingegeben wird um ihn zum vorbestimmten darunter angeordneten Behälter zu bringen und ihn, innerhalb der Beladungsöffnung der einzelnen Behälter, gleichmäßig zu verteilen.

Im Falle einer in die Erde eingelassenen Anlage besteht die Grundstruktur aus einem Gestell welches auf einer umlaufenden, bis auf die Bodenlinie hochragende, Grundmauer aufliegt und mit bekannten z. B. hydraulischen oder mechanischen Hebemechanismen für das Anheben eines Gestelles ausgestattet ist, welches vertikal verfahrbar an der Grundstruktur gelagert ist. Dieses vertikal verfahrbare Gestell weist an der unteren Seite eine Ladeplattform für die fahrbaren Müllbehälter auf während es, wesentlich dem Bodenniveau entsprechend, eine begehbare Plattform mit Einwurfschacht aufweist.

Im mittleren Bereich, zwischen zwei Reihen von Behältern, ist die erfindungsgemäße Transport- und Verteilungsvorrichtung für den Müll vorgesehen welche in einer horizontalen Ebene, zwischen der Mündungsöffnung des Einwurfschachtes und dem oberen Bereich der Müllbehälter arbeitet. Die erfindungsgemäße Transport- und Verteilungsvorrichtung besteht hauptsächlich aus einem Förderband oder einem anderen Mittel für die Beförderung von Festkörpern welches mit seitlichen Wänden ausgestattet ist um das seitliche Herabfallen von Müll zu verhindern, dieses ist in einem zentralen Bereich, zwischen den zwei parallelen Reihen der Müllbehälter um eine vertikale Achse drehbar gelagert wobei diese Behälter auf einer quadratischen Fläche, oder einer rechteckigen Fläche mit einem Verhältnis Länge/Breite nahe 1, abgestellt sind; weiters ist das Förderband an Längsführungen verstellbar gelagert so dass es mit den Enden alle darunter angeordneten Müllbehälter erreichen kann auch wenn diese nicht gleichen Abstand zur vertikalen Drehachse haben und um eine gleichmäßige Verteilung, unter Vermeidung der Bildung von Anhäufungen, durchführen zu können, wobei das Einwerfen des Mülls jeweils an jener Stelle innerhalb der Behälteröffnung stattfindet, wo der niedrigste Stand des Mülls z.B. mittels Ultraschall festgestellt worden war.

Der erfindungsgemäße Mechanismus ermöglicht es weiters den Platz zwischen den zwei Reihen der Behälter zu nutzen indem weitere Behälter, eventuell mit kleineren Ausmaßen, im Bereich der Reihenenden zwischen den Reihen untergebracht werden.

Gemäß einer Weiterentwicklung des Erfindungsgedankens kann die Transport-und Verteilungsvorrichtung, z.B. im Falle dass die Behälter auf einer längeren rechteckigen Fläche aufgestellt sind, auf Führungen verfahrbar gelagert sein welche z.B. parallel zur Anordnung der Behälter in einer einzigen Reihe oder in mehreren Reihen verlaufen können, in diesem Fall ist nicht eine Drehung des Förderbandes erforderlich, dieses nimmt bei jeder Eingabe von Müll über den Einwurfschacht eine Position unter der Mündungsöffnung des Schachtes ein um den Müll aufzunehmen und sich anschließend, bei stillstehendem Förderband, den Führungen entlang zu verschieben und, nachdem es die Position des vorbestimmten Behälters erreicht hat, den Müll durch die Längsbewegung des Förderbandes dort in den Behälter zu befördern wo, z.B. durch Ultraschall, der tiefste Müllstand festgestellt worden war.

Im Falle von mehr als zwei Reihen von Behältern kann die Entleerung in die mittlere Reihe oder in die mittleren Reihen, zwischen den parallelen Führungen hindurch erfolgen.

Die erfindungsgemäße Anlage kann mit einer Kompaktierungsvorrichtung ausgestattet sein welche verfahrbar unter dem Förderband aufgehängt ist um jeden der darunter angeordneten Behälter erreichen zu können. Die Kompaktierungsvorrichtung kann auch an der tragenden Struktur, unterhalb der begehbaren Plattform, bzw. am anhebbaren Gestell verfahrbar aufgehängt sein. Im Falle von fahrbaren Behältern oder von Behältern deren Boden nicht auf der Ladeplattform für die Behälter aufliegt, ist unter dem Boden eines jeden Behälters ein Auflagesockel vorgesehen so dass während der Kompaktierung die Belastung welche auf den Behälterboden wirkt, durch den Auflagesockel aufgenommen wird und auf die Struktur der Ladeplattform für die Behälter abgeleitet wird.

Die Kompaktierungsvorrichtung kann z.B. aus einem Scherenmechanismus mit horizontaler Druckplatte bestehen welche beispielsweise hydraulisch betätigt wird.

Die erfindungsgemäße Anlage bietet sich für einen versenkten Einbau an, wobei ein Grundgestell von einer umlaufenden Grundmauer getragen wird deren oberer Rand wesentlich mit dem Bodenniveau oder dem Niveau einer Decke fluchtet. An diesem Grundgestell kann, vertikal anhebbar und durch bekannte z. B. hydraulische und/oder mechanische Elemente angetrieben, ein Gestell gelagert sein welches eine untere horizontale Ladeplattform und eine obere, mit Einwurfschacht ausgestattete, begehbare Plattform aufweist welche zwischen den zwei Reihen der Behälter mit einem Trägerrahmen für die Transport- und Verteilungsvorrichtung ausgestattet ist. Diese erfindungsgemäße Vorrichtung für den Transport und die Verteilung des Mülls kann, je nach der Anordnungsgeometrie (Verhältnis Breite/Länge) der darunter liegenden Behälter, ein Förderband sein welches in Längsrichtung verfahrbar ist und an einer, um eine vertikale Achse drehbaren, Aufhängung befestigt ist, oder ein Förderband sein welches in Längsrichtung verfahrbar ist und an einem Rahmen welcher seinerseits an Führungen, parallel zu den darunter angeordneten Reihen der Behälter, verfahrbar ist. Insbesondere diese letzte Anordnung ermöglicht eine modulartige Erweiterung oder Reduzierung der Aufnahmefähigkeit der Anlage.

Zwecks Entleerung oder Austausch der Behälter wird das, in Bezug auf das Grundgestell, vertikal anhebbare Gestell mit der Ladeplattform für die Behälter bis auf das Bodenniveau hochgefahren; in dieser Position können die Behälter für die Entleerung entnommen werden.

Die Erfindung wird anhand zweier vorzuziehender, in den beigelegten Zeichnungen schematisch dargestellter, Ausführungsbeispiele einer erfindungsgemäßen Anlage für das differenzierte und undifferenzierte Sammeln von Hausmüll näher erklärt, dabei erfüllen die Zeichnungen rein erklärenden, nicht begrenzenden Zweck.

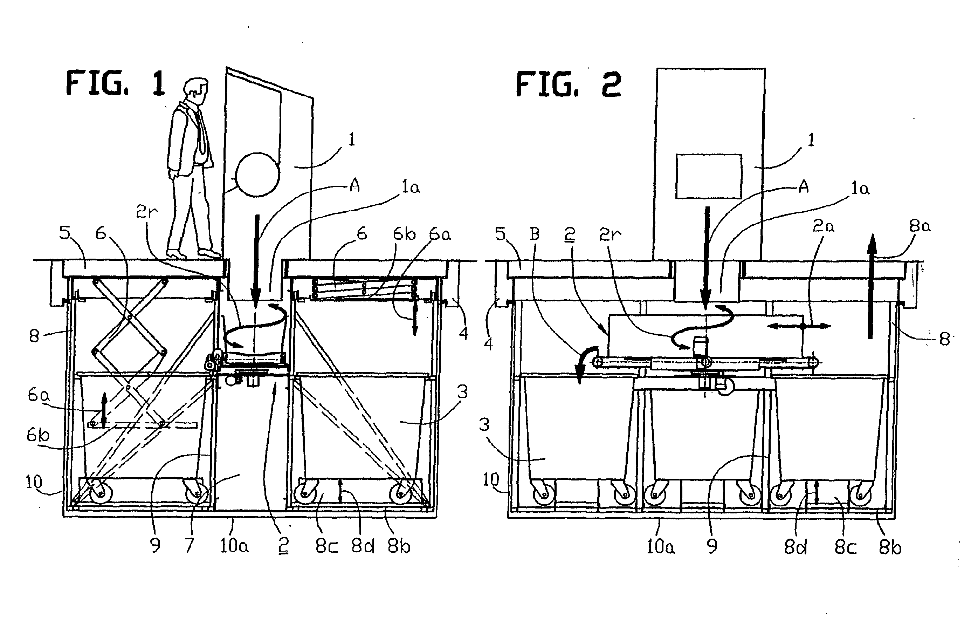

Die Fig. 1 zeigt einen vertikalen Querschnitt durch eine erfindungsgemäße Anlage für das differenzierte und undifferenzierte Sammeln von Hausmüll wobei die Transport- und Verteilungsvorrichtung um eine vertikale Achse drehbar gelagert ist und die unter der begehbaren Plattform angebrachte Kompaktierungsvorrichtung in abgesenkter Stellung gezeigt ist, während eine zweite Kompaktierungsvorrichtung in hochgefahrener Stellung gezeigt ist.

Die Fig. 2 zeigt einen vertikalen Längsschnitt durch die selbe in Fig. 1 gezeigte Anlage.

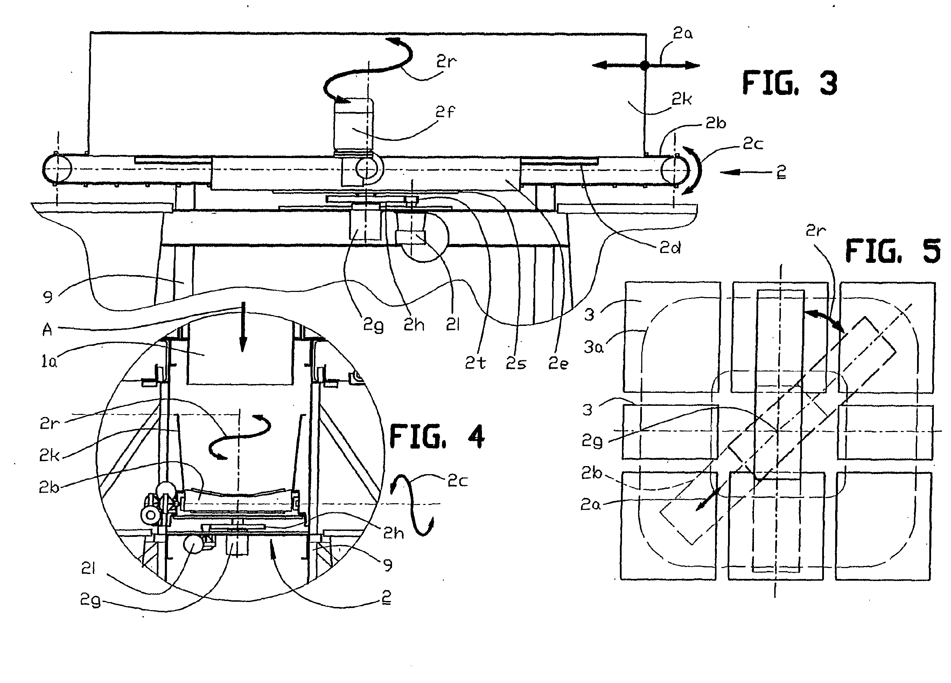

Die Fig. 3 zeigt eine vergrößerte Seitenansicht der Transport- und Verteilungsvorrichtung der erfindungsgemäßen in den Fig. 1 und 2 gezeigten Müllsammelanlage.

Die Fig. 4 zeigt die Vorderansicht der in Fig. 3 gezeigten Transport- und Verteilungsvorrichtung.

Die Fig. 5 zeigt eine schematische Draufsicht auf die, auf der Ladefläche der erfindungsgemäßen in den Fig. 1 und 2 gezeigten Müllsammelanlage abgestellten, Behälter mit Darstellung des ringförmigen Entladebereiches der Transport- und Verteilungsvorrichtung, mittels strichlierter Linien.

Die Fig. 6 zeigt eine Seitenansicht der erfindungsgemäßen Transport- und Verteilungsvorrichtung mit längsverfahrbarem Förderband welches an einem Rahmen, parallel zur Anordnung der darunter liegenden Behälter, verfahrbar ist, wobei eine Kompaktierungsvorrichtung unterhalb des selben Rahmens verfahrbar aufgehängt ist welche durch das selbe für das Förderband vorgesehene Antriebsorgan verstellt wird.

Die Fig. 7 zeigt eine schematische Draufsicht auf die in drei parallelen Reihen auf der Ladeplattform einer erfindungsgemäßen Müllsammelanlage angeordneten Behälter mit Darstellung durch strichlierte Linien des rechteckigen Enladebereiches der Transport- und Verteilungsvorrichtung.

An einer umlaufenden Grundmauer 4 aus armiertem Beton ist ein Grundgestell 10 wesentlich auf Bodenniveau befestigt, dieses weist eine horizontale Auflagestruktur 10a für ein innenliegendes Gestell 8 auf welches vertikal, mittels bekannter hydraulischer und/oder mechanischer Systeme, anhebbar 8a geführt ist. Das Gestell 8 weist im unteren Bereich eine horizontale Ladeplattform 8b für die fahrbaren Behälter 3 auf. Für jeden der Behälter 3 ist ein, in der Höhe verstellbarer, Auflagesockel 8c für die Auflage das Bodens der Behälter 3 vorgesehen.

Die Behälter sind in zwei parallelen Reihen angeordnet und nehmen, zusammen mit einer dazwischenliegenden Trägerstruktur 9 für eine Transport- und Verteilungsvorrichtung 2, eine quadratische Fläche oder eine rechteckige Fläche mit einem Verhältnis Länge/Breite möglichst nahe 1, ein. Zwischen den beiden Reihen der Behälter 3 ist an jedem Ende ein weiterer Behälter 3 vorgesehen.

Im oberen Bereich weist das anhebbare 8a Gestell 8 eine begehbare Plattform 5 auf, auf welcher im zentralen Bereich ein Einwurfschacht 1 vorgesehen ist. Unter der Struktur der begehbaren Plattform 5 können Kompaktierungsvorrichtungen verfahrbar aufgehängt sein welche z.B. aus einem Scherenmechanismus 6 mit, über bekannte hydraulische und/oder mechanische Antriebe, vertikal beweglicher 6a Druckplatte 6b bestehen.

Die erfindungsgemäße Transport- und Verteilungsvorrichtung 2 besteht aus einem Förderband 2b welches horizontal mittels Zahnstangen 2d an seitlichen, mit einer horizontalen Platte oder Struktur 2s verbundenen, Führungen 2e verschiebbar 2a gelagert ist, dabei trägt die Struktur eine zentrale vertikale Welle mit Zahnrad 2h welche drehbar 2r in der Lagerung 2g gehaltert ist und welche mit der Stützstruktur 9 fest verbunden ist. An der selben Struktur 9 ist ein Motor 2i befestigt welcher ein Ritzel trägt das mit dem Zahnrad 2h kämmt um die Drehung 2r der Transport- und Verteilungsvorrichtung 2 zu bewirken. Das Förderband 2b wird auf bekannte Art durch einen Elektromotor angetrieben 2c. Die horizontale Längsverschiebung 2a des Förderbandes 2b zusammen mit den Seitenwänden 2k hingegen wird durch den Motor 2f erreicht welcher auf die Zahnstange 2d wirkt.

Die Vorgänge zwecks Erkennung des Benützers, zwecks Auswahl bezüglich die einzugebende Müllart, sowie zwecks Eingabe und Bestimmung des Gewichts, erfolgen auf bekannte Art mittels, im Einwurfschacht 1 eingebauter, Vorrichtungen. Die bestimmte Müllart (z.B. Glas) fällt A, nach Bestimmung des Gewichtes, nach unten auf das Förderband 2b wo ein seitliches Herabfallen des Mülls durch die Seitenwände 2k verhindert wird. Je nach dem fahrbaren Behälter 3 welcher für die Aufnahme der eingeworfenen Müllart bestimmt ist, wird die Transport- und Verteilungsvorrichtung 2 um einen solchen Winkel gedreht 2r, dass ein Ende des Förderbandes 2b sich über der Beladungsöffnung des gewählten Behälters befindet. Insbesondere für jene vier Behälter 3 welche sich an den Eckbereichen der Ladeplattform 8b befinden, wird das Förderband 2b mittels Motor 2f auch in Längsrichtung 2a verschoben wobei dieser auf die Zahnstangen 2d, welche mit dem Trägerrahmen des Förderbandes 2b verbunden sind, wirkt.

Diese Längsverschiebung 2a ermöglicht es also jeden einzelnen der Behälter 3, unabhängig von seinem Abstand zur vertikalen Drehachse der Verteilungsvorrichtung 2 und der Position der Entladungsextremität des Förderbandes und jeden der Bereiche innerhalb der Beladungsöffnung jedes einzelnen Behälters 3, zu erreichen.

Vor der Entladung B des Mülls in den vorbestimmten Behälter 3 wird erfindungsgemäß, z.B. mittels Ultraschall, eine Erhebung des Füllstandes, bzw. der Unregelmäßigkeit des Füllstandes, im Innern des vorbestimmten Behälters durchgeführt um die Entladung B im Bereich mit niedrigstem Füllstand durchzuführen und so die Ausbildung von Anhäufungen zu vermeiden. Vorteilhafterweise ist das Organ für die Erhebung des Füllstandes am Förderband unterhalb der Entladungsextremität angebracht. Die Füllstandserhebung ist weiters z.B. auch für die Bestimmung der folgenden Kompaktierung, für die Meldung des Füllgrades, bzw. für die Meldung des erreichten höchsten Füllstandes, nutzbar.

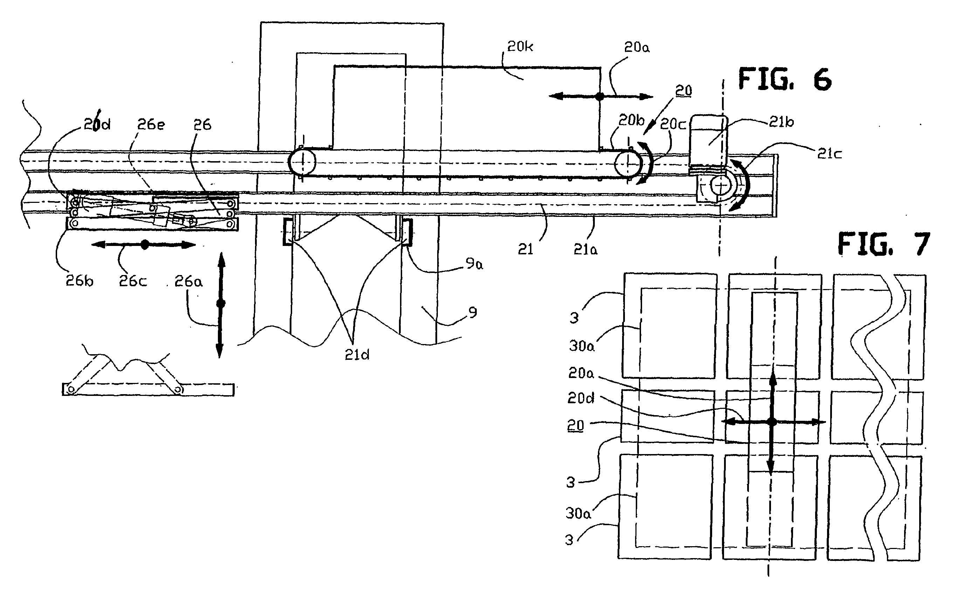

Die Erfindung umfasst weiters dass die Transport- und Verteilungsvorrichtung 20 (Fig. 6 und 7), im Falle der Anordnung der Behälter 3 auf einer rechteckigen langgezogenen Fläche, in einer oder in mehreren Reihen mit einem Verhältnis Länge/Breite welches auch ein Vielfaches von 1 ist, nicht drehbar 2r sondern gemäß der Längserstreckung der Anordnung der Behälter 3 verfahrbar 20d aufgehängt ist. Das Verstellen 20d erfolgt mittels einem Rahmen welcher wesentlich aus zwei horizontalen Führungen 21a besteht an welchen das Förderband 20b oberhalb verfahrbar 20k gelagert ist während unterhalb eine Kompaktierungsvorrichtung verfahrbar 26c aufgehängt ist, welche aus einem Laufwagen 26d, aus einem Scherenmechanismus 26, einer Druckplatte 26b und einem Hydraulikzylinder 26e für die vertikale Betätigung 26a der Druckplatte 26b, besteht. Sei es das Verfahren 20a des Förderbandes 20b als auch das Verfahren 26c der Kompaktierungsvorrichtung 26, 26b kann über ein einziges Übertragungselement 21 (Kette, Riemen) erfolgen welches von einem Motor 21 b angetrieben 21 c wird. Der Rahmen, welcher wesentlich aus den Führungen 21 a besteht, ist verfahrbar 20d mittels Rollelemente 21d gelagert welche in unteren Führungen 9a laufen, welche mit der feststehenden Struktur 9 verbunden sind und welche ihrerseits mit der Struktur des anhebbaren 8a Gestelles 8 der Anlage verbunden ist.

Der Einwurfschacht kann auch außerhalb der Längsachse der Fläche des Bereiches der Anordnung der Behälter 3 und eventuell auch außerhalb der Querachse der selben Fläche angeordnet sein. Bei jedem Einwurfablauf wird die Transport- und Verteilungsvorrichtung 20 den Müll unterhalb der Mündungsöffnung 1 a des Einwurfschachtes 1 aufnehmen, sich anschließend, mit dem Transportband immer in Querstellung zur Richtung der Bandbewegung, verschieben 20d, bis sie den Bereich erreicht hat welcher der Beladungsöffnung des vorbestimmten Behälters 3 entspricht. Durch die Bewegung 20a des Transportbandes 20b in Kombination mit den Bewegungen 20d des Trägerrahmens 21 des Förderbandes oberhalb der Beladungsöffnung des Behälters 3 wird die Erhebung des Füllstandes im Innern des vorbestimmten Behälters 3 durchgeführt um durch die Bewegung 20c des Förderbandes 2b den Müll innerhalb der Beladungsöffnung, dort wo der niedrigste Füllstand erhoben worden war, in den Behälter 3 zu entleeren B um so Müll-Anhäufungen zu vermeiden.

Aufgrund der Erhebungen des Füllstandes in den verschiedenen Behältern 3 kann, infolge exakter Positionierung mittels Verstellen 20d des aus Führungen 21 a bestehenden Rahmens und Verstellen 26c längs dieser Führungen, die Kompaktierungsvorrichtung 26, 26b aktiviert werden. Im Falle der Erhebung eines bestimmten Füllstandes nach der Kompaktierung, kann ein Signal für die Vormerkung der Entleerung gegeben werden und, im Falle der Überschreitung dieses "Vorwarnfüllstandes", kann bei Erreichen des Höchstfüllstandes ein Signal für dringende Entleerung gegeben werden, wobei eventueller weiter anfallender gleichartiger Müll in einem eventuell weiteren Behälter für die selbe Müllart oder in einem "Jolly-Behälter" welcher, bei vollständiger Füllung eines der Behälter, sämtliche Müllarten aufnehmen kann, entleert werden oder es kann ein Signal gegeben werden welches den Benützer informiert, dass zur Zeit kein weiterer Müll der bestimmten Art eingeworfen werden kann.

Insbesondere die erfindungsgemäße Anlage welche mit einer Transport- und Verteilungsvorrichtung arbeitet welche nicht drehbar sondern parallel zu den darunter angeordneten Behältern 3 verfahrbar 20d aufgehängt ist, ermöglicht eine einfache modulartige Anpassung des Fassungsvermögens der Anlage an die effektiven Bedürfnisse des Einzugsgebietes durch Hinzufügen, bzw. Entnehmen, von Behältern 3 und der entsprechenden Längen-Anpassung der Führungen 9a, bzw. durch eine modulartige Erweiterung oder Begrenzung der Struktur der Anlage. Die Erfindung schließt nicht aus, dass die Führungen 9a unterhalb der begehbaren Plattform 5, bzw. an deren Verstärkungsstruktur, befestigt sind; eventuell können die Führungen 9a entsprechend den äußersten Längsrändern der Plattform auf welcher die Behälter 3 angeordnet sind vorgesehen sein.

Im Falle einer in die Erde eingelassenen Anlage, bzw. mit, in Bezug auf die Ladeplattform 8b für die Behälter 3, seitlich angeordnetem Einwurfschacht 1, ist zwischen der Mündungsöffnung des Einwurfschachtes und der Transport- und Verteilungsvorrichtung 2, 20 eine bekannte Transportvorrichtung vorgesehen welche geeignet ist den aus der Mündungsöffnung austretenden Müll zur Transport- und Verteilungsvorrichtung 2, 20, über dem entsprechenden Förderband 2b 20b hinweg, zu befördern; und zwar, im Falle einer drehbar 2r aufgehängten Transport- und Verteilungsvorrichtung 2, in den Bereich der Drehachse und im Falle einer in zwei Richtungen verfahrbaren 20a, 20d Transport- und Verteilungsvorrichtung 20, in einen beliebigen Bereich innerhalb des Entleerungsbereiches 3a.

## Patentansprüche

1. Anlage für das differenzierte und undifferenzierte Sammeln von Hausmüll welche mit einem einzelnen Einwurfschacht (1) ausgestattet ist welcher eine Einwurföffnung, eine Wiegevorrichtung, eine Erhebungseinrichtung für die Benutzerdaten und für den Füllzustande samt elektronischer Tariffierung aufweist, **dadurch gekennzeichnet, dass** auf einer Ladeplattform (8b) eines, eventuell in die Erde, versenkbaren und vertikal anhebbaren (8a) Gestelles (8) auf einer quadratischen oder rechteckigen Fläche mehrere Behälter (3) gemäß einer oder mehrerer paralleler Reihen für die differenzierte und undifferenzierte Sammlung von Müll angeordnet sind und dass zwischen der Mündungsöffnung (1 a) des Einwurfschachtes (1) und den Beladungsöffnungen der einzelnen darunter angeordneten Behälter (3), eine Transport- und Verteilungsvorrichtung (2, 20) in mehrere Richtungen und innerhalb einer horizontalen Ebene verfahrbar (2a, 20a; 2r, 20d) für die Beförderung des Mülls von der Mündungsöffnung (1a) des Einwurfschachtes (1) zur Beladungsöffnung jedes darunter angeordneten Behälters (3) für die Aufnahme der unterschiedlichen Müllarten, aufgehängt ist.

2. Anlage für das differenzierte und undifferenzierte Sammeln von Hausmüll gemäß Patentanspruch 1, **dadurch gekennzeichnet, dass** die Transport und Verteilungsvorrichtung (2, 20) aus einem Förderband (2b, 20b) oder aus einer anderen wesentlich horizontalen Beförderungsvorrichtung für Feststoffe besteht welche horizontal, gemäß der Förderrichtung des Mülls, verfahrbar (2a, 20a) ist so dass diese mit dem Entladebereich des Förderbandes (2b, 20b) verschiedene Positionen innerhalb eines Ringbereiches (3a) oder eines rechteckigen Bereiches (30a) einnehmen kann welche wesentlich den Gesamtbereich der Beladungsöffnungen der darunter angeordneten Behälter (3) umfasst und welche auch unterschiedliche Positionen innerhalb der Beladungsöffnung jedes einzelnen Behälters (3) einnehmen kann.

3. Anlage für das differenzierte und undifferenzierte Sammeln von Hausmüll gemäß Patentanspruch 1 und 2, **dadurch gekennzeichnet, dass** im Entladebereich, unterhalb der Aufhängung des Förderbandes (2b, 20b) ein Lesegerät angebracht ist um, während der Ausführung eines Ableselaufes der Entladeextremität des Förderbandes (2b, 20b), innerhalb der Beladungsöffnung des darunterliegenden Behälters (3), welcher für die Aufnahme des Mülls bestimmt worden war, den Bereich mit dem niedrigsten Füllstand zu erheben wo anschließend der Müll entladen (B) wird.

4. Anlage für das differenzierte und undifferenzierte Sammeln von Hausmüll gemäß den Patentansprüchen 1 und 2, **dadurch gekennzeichnet, dass** das Förderband (2b) gemäß der Förderrichtung des Mülls, längs horizontalen Führungen (2e) verfahrbar (2a) gelagert ist, wobei diese gemäß einer vertikalen Achse drehbar (2r) an einem Rahmen (9) welcher mit dem, mit Ladefläche (8b) für die Behälter (3) ausgestattetem Gestell (8) verbunden ist.

5. Anlage für das differenzierte und undifferenzierte Sammeln von Hausmüll gemäß den Patentansprüchen 1 und 2, **dadurch gekennzeichnet, dass** das Förderband (20b) an horizontalen Führungen (21a) in Längsrichtung verfahrbar (20a) ist, wobei diese ihrerseits längs Führungen (9a) verfahrbar (20d) sind welche mit einem, am Gestell (8) welches mit der Ladefläche (8b) für die Behälter (3) versehen ist, befestigten Rahmen (9) verbunden sind.

6. Anlage für das differenzierte und undifferenzierte Sammeln von Hausmüll gemäß den Patentansprüchen 1, 2 und 5, **dadurch gekennzeichnet, dass** die Führungen (9a) für das Verschieben (20d) der Führungen (21 a) unterhalb an der begehbaren Plattform (5) und/oder an deren Gestell befestigt sind.

7. Anlage für das differenzierte und undifferenzierte Sammeln von Hausmüll gemäß den Patentansprüchen 1 und 5, **dadurch gekennzeichnet, dass** die einzelnen Behälter (3) gemäß einer oder mehrerer paralleler Reihen angeordnet sind und dass die Transport- und Verteilungsvorrichtung (20) parallel zu dieser Reihe oder zu diesen Reihen verfahrbar (20d) gelagert ist, wobei das Förderband (20b) oder eine andere Beförderungsvorrichtung für Feststoffe quer zur Richtung der besagten Bewegung (20d) angeordnet ist und dass das Entleeren (B) des Mülls, in die mittlere oder in die mittleren Reihen von Behältern (3), zwischen den Führungen (9a) hindurch erfolgt.

8. Anlage für das differenzierte und undifferenzierte Sammeln von Hausmüll gemäß den vorhergehenden Patentansprüchen, **dadurch gekennzeichnet, dass** bei parallel über einer einzigen oder über mehreren Reihen von Behältern (3) verfahrbar aufgehängten Transport- und Verteilungsvorrichtung (20) für den Müll, die Auswurföffnung (1a) des Eiwurfschachtes (1) und dieser selbst in jeder beliebigen Position, innerhalb des, durch die zwei horizontalen Bewegungen (2a, 20d) bestimmten, Bewegungsbereiches des Förderbandes (20b) vorgesehen sein kann.

9. Anlage für das differenzierte und undifferenzierte Sammeln von Hausmüll gemäß den Patentansprüchen 1, 2, 3, 6 und 7, **dadurch gekennzeichnet, dass** unterhalb der horizontalen Führungen (21 a) eine Kompaktierungsvorrichtung verfahrbar aufgehängt ist welche über das selbe Übertragungsorgan (21) der Transport- und Verteilungseinrichtung (20) oder über ein eigenes Übertragungsorgan bewegt (26c) wird.

10. Anlage für das differenzierte und undifferenzierte Sammeln von Hausmüll gemäß den Patentansprüchen 1 und 2, **dadurch gekennzeichnet dass**, im Falle einer über der Bodenlinie installierten Anlage, eine bekannte Vorrichtung für die Beförderung von Feststoffen vorgesehen ist welche geeignet ist den Müll vom Einwurfschacht (1) zur Transport- und Verteilungsvorrichtung (2, 20) zu bringen.

## Claims

1. Installation for the differentiated and undifferentiated collection of domestic refuse, which is equipped with a single throw-in shaft (1) having a throw-in opening, a weighing device, a collecting device for the user data and the filling level together with an electronic fee assessment, **characterized in that** on a loading platform (8b) of a bay (8), which can be lowered into the ground and vertically hoisted (8a), a number of containers (3) are placed on a quadratic or rectangular surface in one or more parallel rows for the differentiated and undifferentiated collection of refuse, and between the mouth opening (1a) of the throw-in shaft (1) and the loading openings of the individual containers (3) located underneath, a conveying and distributing device (2, 20) is suspended in a manner that enables it to be displaced in a number of directions and within a horizontal plane (2a, 20a; 2r, 20d) for conveying the refuse from the mouth opening (1a) of the throw-in shaft (1) to the loading opening of each container (3) located underneath for receiving different types of refuse.

2. Installation for the differentiated and undifferentiated collection of domestic refuse according to patent claim 1, **characterized in that** the conveying and distributing device (2, 20) consists of a conveyor belt (2b, 20b), or of another essentially horizontal conveying device for solids, which can be horizontally displaced according to the conveying direction of the refuse (2a, 20a) so that the same can assume different positions with the unloading area of the conveyor belt (2b, 20b) within an annular area (3a), or a rectangular area (30a), which essentially comprises the total area of the loading openings of the containers (3) located underneath, and which may also assume different positions within the loading opening of each individual container (3).

3. Installation for the differentiated and undifferentiated collection of domestic refuse according to patent claims 1 and 2, **characterized in that**, in the unloading area underneath the suspension of the conveyor belt (2b, 20b) a reader is mounted which, during the timing of the interrogation process of the discharging end of the conveyor belt (2b, 20b) within the loading opening of the container (3) which is located underneath and which has been designated for receiving the refuse, is assigned to record the area with the lowest filling level, where the refuse is subsequently unloaded (B).

4. Installation for the differentiated and undifferentiated collection of domestic refuse according to patent claims 1 and 2, **characterized in that** the conveyor belt (2b), according to the conveying direction of the refuse, can be displaced (2a) horizontally along guides (2e), wherein the same is pivot-mounted (2r) to a frame (9) according to a vertical axis, which is connected to the bay (8) equipped with the loading area (8b) for the containers (3).

5. Installation for the differentiated and undifferentiated collection of domestic refuse according to patent claims 1 and 2, **characterized in that** the conveyor belt (20b) can be displaced (20a) in longitudinal direction along horizontal guides (21a), wherein the same in turn can be displaced (20d) along guides (9a), which are connected to a frame (9) that is attached to the bay (8), which is equipped with the loading area (8b) for the containers (3).

6. Installation for the differentiated and undifferentiated collection of domestic refuse according to patent claims 1, 2, and 5, **characterized in that** the guides (9a) for the displacement (20d) of the guides (21a) are attached underneath at the accessible platform (5), and/or at its bay.

7. Installation for the differentiated and undifferentiated collection of domestic refuse according to patent claims 1 and 5, **characterized in that** the individual containers (3) are arranged according to one or more parallel rows, and that the conveying and distributing device (20) can be displaced (20d) parallel to this row, or to these rows, wherein the conveyor belt (20b), or another conveying device for solids is arranged transversely in the direction of the said displacement (20d), and that the removal (B) of the refuse takes place in the center row or rows of containers (3) between the guides (9a).

8. Installation for the differentiated and undifferentiated collection of domestic refuse according to the previous patent claims, **characterized in that** with a conveying and distributing device (20) for the refuse that is suspended in a manner that enables it to be displaced parallel across a single row, or across several rows of containers (3), the ejection opening (1a) of the throw-in shaft (1) and the latter itself may be provided in any position within the displacement area of the conveyor belt (20b) that is determined by the two horizontal displacements (2a, 20d).

9. Installation for the differentiated and undifferentiated collection of domestic refuse according to patent claims 1, 2, 3, 6, and 7, **characterized in that** a compaction device is suspended in a displaceable manner underneath the horizontal guides (21a), which is displaced via the same transfer organ (21) of the conveying and distributing device (20), or via a dedicated transfer organ (26c).

10. Installation for the differentiated and undifferentiated collection of domestic refuse according to patent claims 1 and 2, **characterized in that** in the case of an installation mounted above the ground, a known device for the conveying of solids is provided, which is suitable to transport the refuse from the throw-in shaft (1) to the conveying and distributing device (2, 20).

## Revendications

1. Installation pour la collecte différenciée et non différenciée de déchets ménagers, laquelle est équipée d'une seule cage d'introduction (1) qui comporte une ouverture d'introduction, un dispositif de pesage, un dispositif d'enregistrement des données utilisateur et de l'état de remplissage, y compris un système de tarification électronique, **caractérisée en ce que**, sur une surface carrée ou rectangulaire, plusieurs bacs (3) pour la collecte différenciée et non différenciée de déchets ménagers, agencés en un ou plusieurs rangs parallèles, sont disposés sur une plate-forme de chargement (8b) d'une structure (8) pouvant éventuellement être abaissée dans le sol et être relevée (8a) verticalement, et **en ce que**, entre l'ouverture d'accès (1a) de la cage d'introduction (1) et les ouvertures de chargement des différents bacs (3) disposés en dessous de ces dernières, est suspendu un dispositif de transport et de distribution (2, 20), mobile dans plusieurs directions et à l'intérieur d'un plan horizontal (2a, 20a ; 2r, 20d) pour transférer les déchets depuis l'ouverture d'accès (1a) de la cage d'introduction (1) vers l'ouverture de chargement de chaque bac (3), disposé en dessous de cette dernière et destiné à recevoir les différents types de déchets.

2. Installation pour la collecte différenciée et non différenciée de déchets ménagers selon la revendication 1, **caractérisée en ce que** le dispositif de transport et de distribution (2, 20) est formé par une bande de convoyage (2b, 20b) ou par un autre dispositif de transport sensiblement horizontal pour matières solides, lesquels peuvent être déplacés (2a, 20a) horizontalement dans la direction de transport des déchets, de telle sorte que ledit dispositif avec la zone de déchargement de la bande de convoyage (2b, 20b) peut être amené dans différentes positions à l'intérieur d'une zone annulaire (3a) ou d'une zone rectangulaire (30a), qui couvre sensiblement toute la zone des ouvertures de chargement des bacs (3) disposés en dessous, et lequel peut aussi être amené dans différentes positions à l'intérieur de l'ouverture de chargement de chaque bac (3).

3. Installation pour la collecte différenciée et non différenciée de déchets ménagers selon les revendications 1 et 2, **caractérisée en ce que** dans la zone de déchargement, en dessous de la suspension de la bande de convoyage (2b, 20b), est monté un dispositif de lecture qui, pendant le déroulement d'un processus d'interrogation de l'extrémité de déchargement de la bande de convoyage (2b, 20b) à l'intérieur de l'ouverture de chargement du bac (3) qui est disposé en dessous et qui a été déterminé pour recevoir les déchets, est destiné à enregistrer la zone avec le plus faible état de remplissage, dans laquelle seront ensuite déchargés (B) les déchets.

4. Installation pour la collecte différenciée et non différenciée de déchets ménagers selon les revendications 1 et 2, **caractérisée en ce que** la bande de convoyage (2b) est montée de manière mobile (2a) dans la direction de transport des déchets le long de guidages (2e) horizontaux, ces derniers étant montés de manière à pouvoir tourner (2r) autour d'un axe vertical sur un châssis (9) qui est assemblé à l'ossature (8) équipée de la plate-forme de chargement (8b) pour les bacs (3).

5. Installation pour la collecte différenciée et non différenciée de déchets ménagers selon les revendications 1 et 2, **caractérisée en ce que** la bande de convoyage (20b) est mobile (20a) dans le sens longitudinal sur des guidages (21a) horizontaux, ces derniers étant montés mobiles (20d) pour leur part le long de guidages (9a), qui sont assemblés à un châssis (9) fixé contre l'ossature (8) équipée de la plate-forme de chargement (8b) pour les bacs (3).

6. Installation pour la collecte différenciée et non différenciée de déchets ménagers selon les revendications 1, 2 et 5, **caractérisée en ce que** les guidages (9a) pour le coulissement (20d) des guidages (21a) sont fixés contre le dessous de la plate-forme (5) praticable et/ou contre le châssis de celle-ci.

7. Installation pour la collecte différenciée et non différenciée de déchets ménagers selon les revendications 1 et 5, **caractérisée en ce que** les différents bacs (3) sont agencés en un ou plusieurs rangs parallèles et **en ce que** le dispositif de transport et de distribution (20) est monté de manière mobile (20d) parallèlement à ce rang ou ces rangs, la bande de convoyage (20b) ou un autre dispositif de convoyage pour matières solides étant agencés perpendiculairement à la direction dudit mouvement (20d), et **en ce que** le déchargement (B) des déchets est effectué dans le rang central ou les rangs centraux de bacs (3) entre les guidages (9a).

8. Installation pour la collecte différenciée et non différenciée de déchets ménagers selon l'une quelconque des revendications précédentes, **caractérisée en ce que**, avec un dispositif de transport et de distribution (20) des déchets, suspendu de manière mobile au-dessus d'un seul ou de plusieurs rangs de bacs (3), l'ouverture d'accès (1a) de la cage d'introduction (1) et celle-ci, elle-même, peuvent être prévus dans n'importe quelle position à l'intérieur de la zone de mouvement, définie par les deux mouvements (2a, 20d) horizontaux, de la bande de convoyage (20b).

9. Installation pour la collecte différenciée et non différenciée de déchets ménagers selon les revendications 1, 2, 3, 6 et 7, **caractérisée en ce qu'**en dessous des guidages horizontaux (21a) est suspendu de manière mobile un dispositif de compactage, qui est mis en mouvement par le même organe de transfert (21) que le dispositif de transport et de distribution (20) ou par son propre organe de transfert (26c).

10. Installation pour la collecte différenciée et non différenciée de déchets ménagers selon les revendications 1 et 2, **caractérisée en ce que**, dans le cas d'une installation mise en place au-dessus du sol, il est prévu un dispositif connu pour le convoyage de matières solides, lequel est apte à transférer les déchets depuis la cage d'introduction (1) vers le dispositif de transport et de distribution (2, 20).
